# EUROPEAN PATENT APPLICATION

(11) **EP 4 843 697 A1**
(43) Date of publication of application: **25.11.2026**
(21) Application number: 26173018.8
(22) Date of filing: 17.04.2026
(51) Int. Cl.: B23K 26/244, B23K 26/322, B23K 26/323, B23K 101/34, B23K 103/22

(54) **METHOD OF FABRICATING HETEROGENEOUS LAP WELDED JOINTS BETWEEN NICKEL-PLATED STEEL SHEET AND MULTI-LAYER COPPER FOILS**

(30) Priority: 17.04.2025 TW 114114563
(71) Applicant: E-one Moli Energy Corp., Tainan City 741014 (TW)
(72) Inventor: CHEN, Yi-Hsuan, 741014 Tainan City (TW); YEH, Nan-Hung, 741014 Tainan City (TW); SHIUE, Ren-Jen, 741014 Tainan City (TW); CHUANG, Jen-Chia, 741014 Tainan City (TW)
(74) Representative: Viering, Jentschura & Partner mbB Patent- und Rechtsanwälte

(57) **Abstract**

A method of fabricating a heterogeneous lap welded joint (5) between a nickel-plated steel sheet (1) and N copper foils (2), wherein N is a natural number, comprises pressing the nickel-plated steel sheet (1) against the N copper foils (2), and focusing a high-power green laser beam (3) on a surface of the nickel-plated steel sheet (1). The high-power green laser beam (3) melts through the nickel-plated steel sheet (1) and the N copper foils (2), and subsequently solidifies to form the heterogeneous lap welded joint (5). The method utilizes a green laser wavelength optimally absorbed by copper, overcoming limitations of conventional resistance welding and blue laser systems, thereby enabling high-efficiency, high-quality, and reliable electrical connections suitable for mass production of lithium-ion battery components.

## Description

Priority claim: This application claims priority to Taiwan Application Serial No. 114114563, filed on 17 April 2025.

### 1. TECHNICAL FIELD

The present invention relates to a method of fabricating a heterogeneous lap welded joint between a nickel-plated steel sheet and multi-layer copper foils, and more particularly, to a method of fabricating such a heterogeneous lap welded joint between a nickel-plated steel sheet and multi-layer copper foils using a laser with high efficiency and high quality.

### 2. BACKGROUND ART

Lithium-ion power batteries, by virtue of their excellent characteristics such as high energy density, long cycle life, and low self-discharge rate, have become indispensable key components in fields such as electric vehicles, power tools, drones, and energy storage systems. Their core operation relies on the back-and-forth intercalation and deintercalation of lithium ions between the positive and negative electrodes, thereby achieving the storage and release of electrical energy.

In the structure of a lithium-ion battery, the positive electrode material plays the role of providing lithium ions. Common materials include lithium cobalt oxide (LiCoO₂, an early mainstream material with high energy density but higher cost), lithium manganese oxide (LiMn₂O₄, lower cost but with room for improvement in cycle life and high-temperature performance), lithium nickel oxide (LiNiO₂ and its modified materials such as NCM and NCA, which have high energy density and represent a development trend), and lithium iron phosphate (LiFePO₄, which offers high safety and long cycle life but relatively lower energy density). To effectively collect and conduct current, aluminum foil is typically used as the current collector for the positive electrode.

The primary function of the negative electrode material is to store lithium ions migrating from the positive electrode, and its lithium storage capacity directly determines the energy density of the battery. Currently, graphite-based materials are widely used as negative electrode materials due to their low cost and stable performance. To further enhance energy density, researchers are actively developing and applying new negative electrode materials such as silicon and graphene, which theoretically offer higher lithium storage capacity. Similar to the positive electrode, the negative electrode also requires a current collector, typically copper foil, which has excellent electrical conductivity and high chemical stability.

The charge-discharge process of a lithium battery is a process of lithium ion migration. During charging, an external power source drives lithium ions to deintercalate from the positive electrode, migrate through the electrolyte to the negative electrode, and intercalate into the layered structure or micropores of the negative electrode material. The more lithium ions are intercalated, the higher the battery's charging capacity. During discharge, lithium ions in the negative electrode material are released, migrate back through the electrolyte to the positive electrode, and ultimately converge at the aluminum current collector of the positive electrode to form an external output current.

For cylindrical lithium-ion batteries, to ensure battery safety and reliability, a cylindrical nickel-plated steel can is formed from a nickel-plated steel sheet, which is typically used as the outermost layer for sealing and encapsulation. This nickel-plated steel can not only provide physical protection but, more importantly, serves as the grounding terminal of the negative electrode. To complete the current path, the copper current collector layer, composed of multi-layer copper foils at the bottom of the battery, must provide a reliable electrical connection to the nickel-plated steel can.

At present, in the large-scale production of such cylindrical lithium batteries, resistance welding technology is commonly used to connect the bottom of the nickel-plated steel can with the copper foils inside the battery. However, this welding method has revealed some significant drawbacks in actual production, such as easy generation of weld spatter, which leads to a decrease in yield; open weld problems that cause poor electrical connection and thus excessively high contact resistance, affecting the performance and safety of the battery; and poor contact at the lap joint that may also lead to an increase in the internal resistance of the battery, affecting charge-discharge efficiency.

Facing the urgent demand for lithium-ion batteries with higher energy density in the future, existing resistance welding technology has become a bottleneck in improving the performance and production efficiency of lithium-ion batteries. Therefore, there is an urgent need to develop and introduce more advanced, reliable connection technologies to address the shortcomings of resistance welding and ensure that the quality and performance of next-generation lithium-ion batteries meet higher standards. This will help promote the further development of electric transportation and energy storage technologies.

Laser welding, as an advanced material joining technology, utilizes a high-power-density laser beam as the energy source to precisely melt the materials and form a strong welded joint. Compared with traditional medium- and low-energy-density welding methods, laser welding, with an energy density of up to 10⁶ W/cm², offers many outstanding advantages, including extremely low total heat input, which significantly reduces heat-affected zone formation on the base material and thereby lowers deformation caused by thermal stress. In addition, laser welding can achieve high-quality, high-aspect-ratio (weld depth-to-width ratio) weld beads, which are crucial for applications requiring high strength and sealing. More notably, laser welding also offers fast welding speed, precise control, and ease of automation, making it highly favored in modern industrial production.

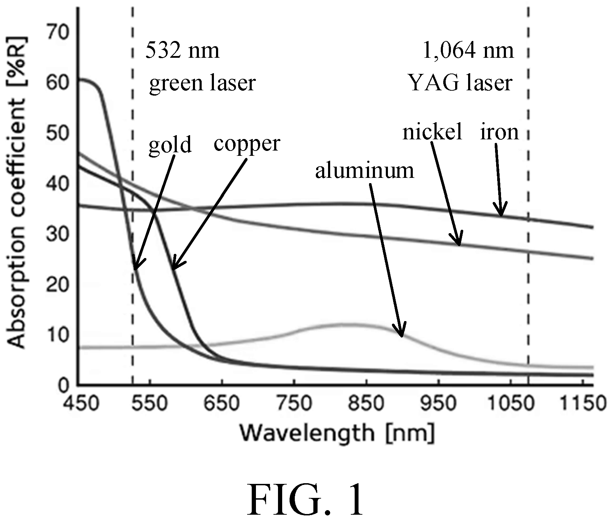

However, different metal materials exhibit significant differences in energy absorption rates for laser beams of different wavelengths, and this absorption rate directly determines the effective utilization of energy during the welding process, thereby greatly affecting the quality of the weld joint. A high absorption rate means that more laser energy is absorbed by the material and converted into thermal energy, thereby achieving melting and welding more effectively. Therefore, selecting a laser source is very important. Please refer to FIG. 1, which shows the absorption rate data of five common metals (copper, gold, nickel, iron, and aluminum) at different laser wavelengths.

From FIG. 1, it can be clearly seen that the absorption rate of copper metal for the traditional yttrium aluminum garnet (YAG) laser at a wavelength of 1064 nm is very low, only about 2%. This means that if a laser beam at this wavelength is used to weld copper, the vast majority of the laser energy will not be effectively absorbed by the copper surface. It will instead undergo strong reflection or scattering. This low absorption rate not only makes it difficult to form a stable and reliable weld joint but, more seriously, the reflected or scattered laser beam may damage optical components in the laser system, such as the laser lens and cavity, making the use of traditional YAG lasers for welding copper metal very difficult or even infeasible.

In contrast, when a shorter-wavelength 450 nm blue laser is used for welding, the absorption rate of the copper metal surface for blue light can be significantly increased to 43%. This substantial improvement makes it possible to weld copper. It has numerous research papers on blue laser welding of copper, resulting in a large body of published work. However, although blue lasers show great potential in copper welding, currently available commercial blue laser technologies still have some limitations that hinder their widespread application in the mass production of heterogeneous lap welded joints between nickel-plated steel sheets and multi-layer copper foils. These shortcomings mainly include: stability over long-term use needs to be improved, especially in high-power continuous operation environments; relatively large laser spot sizes that may affect welding precision and fine structures; insufficient output power to meet the needs of large-scale production; and a lack of mature and reliable mass-production-level scanning mirror sets and other peripheral supporting equipment. These technical bottlenecks high-quality lithium-ion battery component welding production.

### 3. DISCLOSURE OF THE INVENTION

Technical Problem: In view of the drawbacks of the prior art, it is an object of the present invention to provide a method of fabricating a heterogeneous lap welded joint between a nickel-plated steel sheet and multi-layer copper foils that overcomes the limitations of conventional resistance welding and blue laser welding, thereby enabling high-efficiency, high-quality, and reliable welding suitable for industrial mass production of lithium-ion battery components.

Solution to the Technical Problem: This object is achieved by a method according to claim 1. According to the present invention, the method is, firstly, to press the nickel-plated steel sheet against N copper foils, where N is a natural number. Subsequently, a high-power green laser beam is focused on a surface of the nickel-plated steel sheet such that the high-power green laser beam melts through the nickel-plated steel sheet and the N copper foils and then solidifies to form the heterogeneous lap welded joint between the nickel-plated steel sheet and the N copper foils.

In a preferred embodiment, the power range of the high-power green laser beam may range from 200 W to 1000 W.

In a preferred embodiment, the wavelength range of the high-power green laser beam may range from 500 nm to 550 nm.

In a preferred embodiment, the first thickness range of the nickel plating layer of the nickel-plated steel sheet may range from 1 µm to 5 µm.

In a preferred embodiment, the second thickness range of the nickel-plated steel sheet may range from 200 µm to 600 µm.

In a preferred embodiment, the third thickness range of each copper foil may range from 5 µm to 20 µm.

In a preferred embodiment, the number of layers N of the N copper foils may range from 1 to 30.

Advantageous Effects: Different from the prior art, the method according to the present invention adopts high-power green laser welding, which optimally matches the absorption characteristics of copper without suffering from the industrial limitations of blue lasers. This enables fabrication of a heterogeneous lap welded joint with high efficiency, high quality, minimal heat input, and superior electrical conductivity, thereby effectively supporting the performance requirements of next-generation lithium-ion batteries.

### 4. BRIEF DESCRIPTION OF THE DRAWINGS

The invention will now be described by way of example only, with reference to the accompanying drawings, in which:
FIG. 1 is a graph showing the absorption coefficient of five common metals (copper, gold, nickel, iron, aluminum) at different laser wavelengths;
FIG. 2 is a schematic side view of a structure obtained at an initial pressing stage of the method according to a preferred embodiment;
FIG. 3 is a schematic side view of a structure obtained during laser irradiation according to the preferred embodiment; and
FIG. 4 is a schematic side view of a structure obtained after solidification of a molten zone according to the preferred embodiment.

### 5. DETAILED DESCRIPTION OF THE INVENTION

The following detailed description is provided to enable a person skilled in the art to fully understand and carry out the present invention. It should be understood that the appended drawings are provided merely for reference and illustration and are not intended to limit the scope of the present invention.

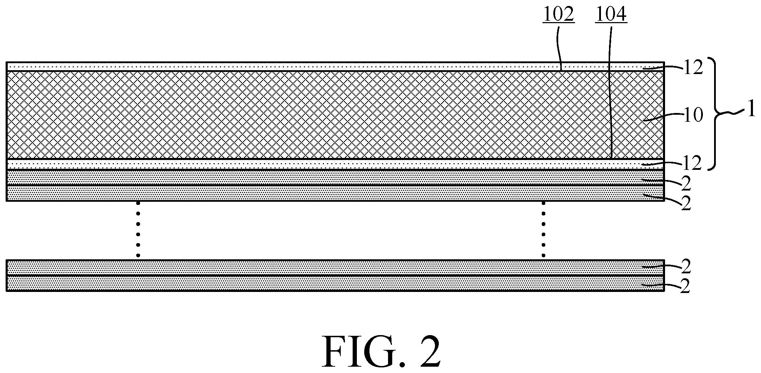

Referring to FIGS. 2, 3, and 4. These figures schematically illustrate, in side view, the structures obtained at different stages of the method of fabricating a heterogeneous lap welded joint (5) between a nickel-plated steel sheet (1) and N copper foils (2) according to a preferred embodiment of the present invention, where N is a natural number.

As shown in FIG. 2, the nickel-plated steel sheet (1) comprises a steel sheet (10) and a nickel plating layer (12). The steel sheet (10) has an upper surface (102) and a lower surface (104). The nickel plating layer (12) covers the upper surface (102) and the lower surface (104) of the steel sheet (10), respectively.

In a preferred embodiment, the first thickness range of the nickel plating layer (12) of the nickel-plated steel sheet (1) may range from 1 µm to 5 µm.

In a preferred embodiment, the second thickness range of the nickel-plated steel sheet (1) may range from 200 µm to 600 µm.

As also shown in FIG. 2, the method of fabricating a heterogeneous lap welded joint (5) between a nickel-plated steel sheet 1 and N copper foils (2) according to the preferred embodiment of the present invention is, firstly, to press the nickel-plated steel sheet (1) against the N copper foils (2). In FIG. 2, the nickel-plated steel sheet (1) presses against the uppermost copper foil (2) of the N copper foils (2) with the nickel plating layer (12) covering the lower surface (104) of the steel sheet (10).

In a preferred embodiment, the third thickness range of each copper foil (2) may range from 5 µm to 20 µm.

In a preferred embodiment, the number of layers N of the N copper foils (2) may range from 1 to 30.

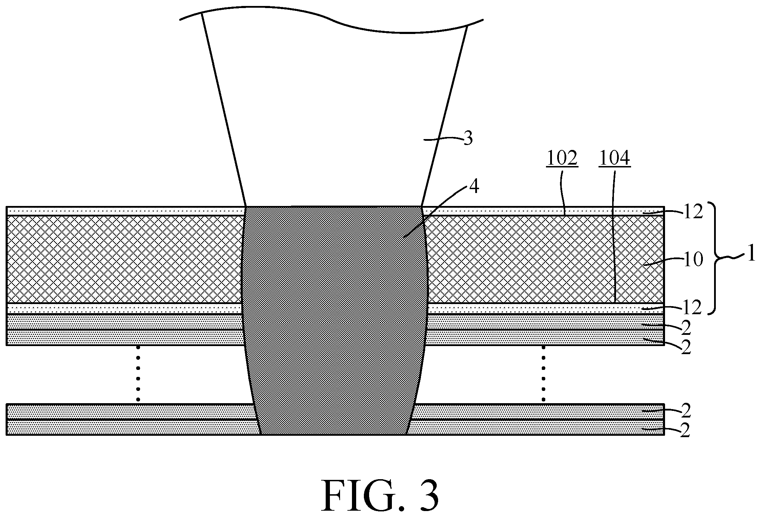

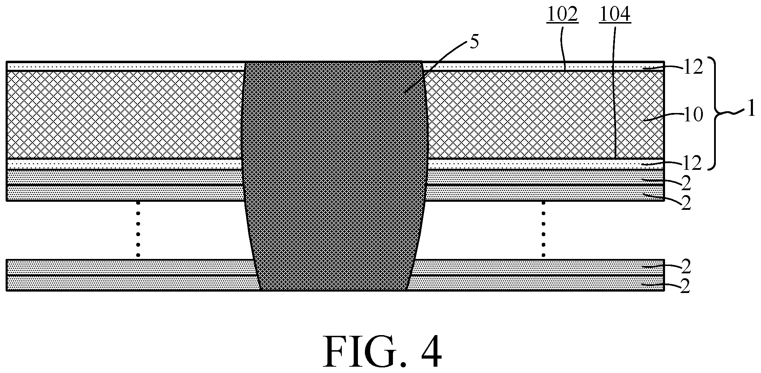

Finally, as shown in FIG. 3, the method according to the preferred embodiment of the present invention is to focus a high-power green laser beam (3) on a surface of the nickel-plated steel sheet (1) such that the high-power green laser beam (3) melts through the nickel-plated steel sheet (1) and the N copper foils (2) to form a molten zone (4). Then the molten zone (4) solidifies to form the heterogeneous lap welded joint (5) between the nickel-plated steel sheet (1) and the N copper foils (2), as shown in FIG. 4. In FIG. 3, the high-power green laser beam (3) is focused on the nickel plating layer (12) covering the upper surface (102) of the steel sheet (10). In practice, a plurality of independent lap welded joints (5) must be formed on the nickel-plated steel sheet (1), and the N copper foils (2). In FIG. 4, only one heterogeneous lap welded joint (5) is illustrated as a representative example.

In a preferred embodiment, the power range of the high-power green laser beam (3) may range from 200 W to 1000 W.

In a preferred embodiment, the wavelength range of the high-power green laser beam (3) may range from 500 nm to 550 nm.

Several embodiments of the present invention use a high-power green laser beam (3) to perform heterogeneous welding on the nickel-plated steel sheet (1) and multi-layer copper foils (2). The steel sheet (10) inside the nickel-plated steel sheet (1) has dimensions of 55 mm × 40 mm × 300 µm. The upper surface (102) and lower surface (104) of the steel sheet (10) are both plated with a 2 µm thick pure nickel layer to form the nickel plating layer (12). Each selected copper foil (2) has a length of 55 mm, a width of 40 mm, and a thickness of 8 µm. Twenty copper foils (2) of the same thickness, are stacked to form the multi-layer copper foils (2). The nickel-plated steel sheet (1) and the multi-layer copper foils (2) are stacked, placed in a fixture, fixed, and pressed tightly. A TruDisk 2021 green laser manufactured by TRUMPF is used. The laser has a maximum output power of 2000 W, a beam wavelength of 515 nm, and a spot diameter of 255 µm. A rectangular-pulse waveform mode is used during welding. The high-power green laser beam (3) emits a 20-ms pulse every 0.5 mm. After each 20 ms laser pulse, the molten zone (4) formed between the nickel-plated steel sheet (1) and the multi-layer copper foils (2) solidifies, forming a heterogeneous lap welded joint (5). In practice, a plurality of independent, heterogeneous lap welded joints (5) must be formed on the nickel-plated steel sheet (1) and the multi-layer copper foils (2). The high-power green laser beam (3) first irradiates and focuses on the surface of the nickel-plated steel sheet (1), melts through the nickel-plated steel sheet (1), and continues to melt the multi-layer copper foils (2). When the high-power green laser beam (3) stops irradiating, the molten zone (4) solidifies to form the heterogeneous lap welded joint (5), as schematically shown in FIG. 4.

In Embodiment 1 of the present invention, high-purity nitrogen gas is blown over the surface of the nickel-plated steel sheet (1) during welding to prevent oxidation of the weld joint, with a nitrogen flow rate of 40 L/min. When the laser power is 240 W, the nickel-plated steel sheet (1) is not melted through; when the laser power is increased to 260 W, the nickel-plated steel sheet (1) has been melted through, but the multi-layer copper foils (2) are not melted at all, so no heterogeneous lap welded joint (5) is formed; when the laser power is increased to 280 W, the nickel-plated steel sheet (1) has been melted through and the first layer of copper foil (2) of the multi-layer copper foils (2) has also been melted, so the heterogeneous lap welded joint (5) is successfully formed.

In Embodiment 2 of the present invention, high-purity nitrogen gas is blown over the surface of the nickel-plated steel sheet (1) during welding to prevent oxidation of the weld joint, with a nitrogen flow rate of 40 L/min. When the laser power is 300 W, the nickel-plated steel sheet (1) is melted through and the first six layers of the multi-layer copper foils (2) are also melted, so the heterogeneous lap welded joint (5) is successfully formed; when the laser power is 340 W, the nickel-plated steel sheet (1) is melted through and the first ten layers of copper foils (2) of the multi-layer copper foils (2) are also melted, so the heterogeneous lap welded joint (5) is successfully formed; when the laser power is 380 W, the nickel-plated steel sheet (1) is melted through and all twenty layers of copper foils (2) inside the multi-layer copper foils (2) are melted, so the heterogeneous lap welded joint (5) is successfully formed.

In Embodiment 3 of the present invention, no high-purity nitrogen gas is blown over the surface of the nickel-plated steel sheet (1) during welding. When the laser power is 360 W, the nickel-plated steel sheet (1) is melted through. All twenty layers of copper foils (2) are melted. The heterogeneous lap-welded joint (5) can still be successfully formed.

Through the above detailed description of the present invention, it can be clearly understood that the method according to the present invention adopts high-power green laser welding, which is different from blue laser welding and does not have the shortcomings of blue laser welding, and can fabricate the heterogeneous lap welded joint between the nickel-plated steel sheet and multi-layer copper foils with high efficiency and high quality.

The detailed description provided above illustrates the features and spirit of the present invention. Those skilled in the art will readily observe that numerous modifications and alterations of the device and method may be made while retaining the teaching of the invention. Accordingly, the above disclosure should be construed as limited only by the metes and bounds of the appended claims.

## Claims

1. A method of fabricating a heterogeneous lap welded joint (5) between a nickel-plated steel sheet (1) and N copper foils (2), wherein N is a natural number, the method comprising the steps of:
pressing the nickel-plated steel sheet (1) against the N copper foils (2); and
focusing a laser beam on a surface of the nickel-plated steel sheet (1),
**characterized in that**
the laser beam is a high-power green laser beam (3) such that the high-power green laser beam (3) melts through the nickel-plated steel sheet (1) and the N copper foils (2) and then solidifies to form the heterogeneous lap welded joint (5) between the nickel-plated steel sheet (1) and the N copper foils (2).

2. The method according to claim 1, **characterized in that**, the power of the high-power green laser beam (3) ranges from 200 W to 1000 W.

3. The method according to claim 2, **characterized in that**, a wavelength of the high-power green laser beam (3) ranges from 500 nm to 550 nm.

4. The method according to claim 3, **characterized in that**, a first thickness of a nickel plating layer (12) of the nickel-plated steel sheet (1) ranges from 1 µm to 5 µm.

5. The method according to claim 3, **characterized in that**, a second thickness of the nickel-plated steel sheet (1) ranges from 200 µm to 600 µm.

6. The method according to claim 3, **characterized in that**, a third thickness of each copper foil (2) ranges from 5 µm to 20 µm.

7. The method according to claim 3, **characterized in that**, the number of layers N of the N copper foils (2) ranges from 1 to 30.
